Europäisches Patentamt

European Patent Office

Office européen des brevets

(19)

(11) EP 1 722 170 A1

(12) EUROPEAN PATENT APPLICATION

(43) Date of publication:
15.11.2006 Bulletin 2006/46

(51) Int Cl.:
F24F 12/00 (2006.01)

(21) Application number: 06009785.4

(22) Date of filing: 11.05.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 11.05.2005 KR 20050039373

(71) Applicant: LG Electronics Inc.
Yongdungpo-gu
Seoul (KR)

(72) Inventors:
• Kim, Kyung Hwan
Uiwang-si
Gyeonggi-do (KR)

• Choi, Keun Hyoung
Dongjak-gu
Seoul (KR)
• Choi, Dong Whan
Dongnae-gu
Busan (KR)
• Choi, Ho Seon
Dongjak-gu
Seoul (KR)

(74) Representative: Vossius & Partner
Siebertstrasse 4
81675 München (DE)

(54) Ventilating system

(57) The present invention relates to a high efficiency total heat exchange ventilating system which can prevent temperature rise of supply air caused by heat generated at a motor for minimizing reduction of total heat exchange efficiency.

The ventilating system includes a case (100) which is an exterior of the ventilating system, a total heat exchanger (130) in the case (100) for making heat exchange between air discharged to an outside of room and air supplied to the room, an air supply fan (141) and an air discharge fan (151) mounted in the same direction with reference to the total heat exchanger (130), and an air supply motor (142) and an air discharge motor (152) for supplying power to the air supply fan and the air discharge fan, respectively, wherein the air supply fan is mounted in an air flow line of the air being supplied, and the air supply motor is isolated from the air supply fan and exposed to an air flow line of the air being discharged.

FIG. 3

**Description**

This application claims the benefit of Korean Application No. P2005-0039373 filed on May 11, 2005, which is hereby incorporated by reference as if fully set forth herein.

The present invention relates to ventilating systems, and more particularly, to a ventilating system which enables high efficiency total heat exchange.

The ventilation discharges polluted room air, and supplies fresh outdoor air for maintaining a fresh room environment.

In the ventilating methods, there are a natural ventilating method in which room air is discharged through an opening in a building by using a difference of densities of air caused by a temperature difference between indoor/outdoor, or wind power as a motive power, and a forced ventilation (or mechanical ventilation) in which air is forcibly supplied/discharged to/from the room by using a fan.

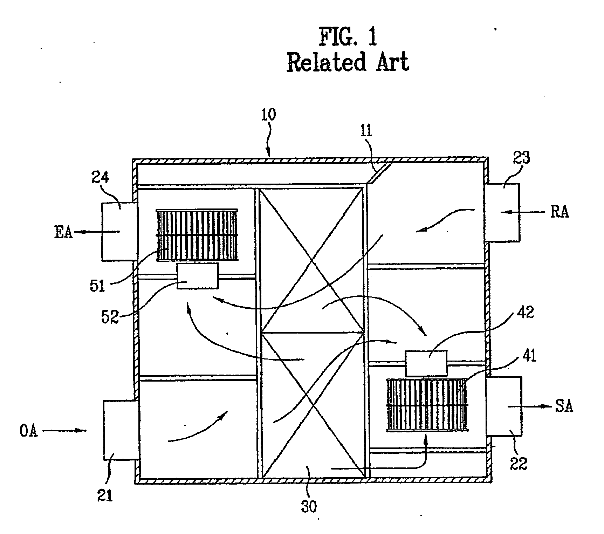

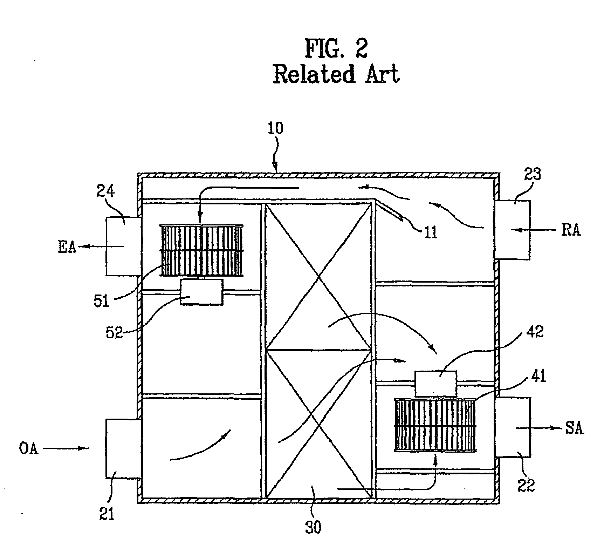

A related art ventilating system will be described with reference to FIGS. 1 and 2.

The related art ventilating system is provided with a case 10 which is an exterior thereof, a total heat exchanger 30 for making heat exchange between air being supplied/discharged to/from the case 10, an air supply fan 41 and an air supply motor 42 for supplying air, and an air discharge fan 51 and an air discharge motor 52 for discharging air.

In one side of the case 10, there is an outdoor air inlet 21 for drawing outdoor air (OA), and a room air outlet 24 for discharging exhaust air (EA).

In the meantime, in the other side of the case 10, there is a room air inlet 23 for drawing room air (RA), and an outdoor air outlet 22 for supplying supply air (SA) to the room.

In the case 10, there are a passage for guiding the outdoor air drawn through the outdoor air inlet 21 to the outdoor air outlet 22 through the total heat exchanger 30, and a passage for guiding the room air drawn through the room air inlet 23 to the room air outlet 24 through the total heat exchanger 30.

Behind the room air outlet 24, there are the air discharge fan 51 and the air discharge motor 52 for forced discharge of the room air, and behind the outdoor air outlet 22, there are the air supply fan 41 and the air supply motor 42 for forced supply of the outdoor air.

The operation of the heat exchange type ventilating system will be described.

As the air discharge fan 51 and the air discharge motor 52 come into operation, the polluted room air is introduced to the case 10 through the room air inlet 23, passes through the total heat exchanger 30, and is discharged to an outside of room through the room air outlet 24.

At the same time with this, as the air supply fan 41 and the air supply motor 42 come into operation, fresh outdoor air is introduced to the case 10 through the outdoor air inlet 21, passes through the total heat exchanger 30, and is supplied to the room through the outdoor air inlet 22.

In the meantime, referring to FIG. 2, in spring/autumn when a temperature difference between the room and outdoor is not great, a damper 11 is opened to make the room air discharged to an outside of the room directly through a bypass without passing through the total heat exchanger 30.

However, the related art ventilating system has the following problems.

The total heat exchanger 30 is operated in a principle in which air [in general, supply air (SA) and exhaust air (EA)] having a temperature difference is made to pass through passages separated by a high efficiency heat exchange membrane in the heat exchanger 30, to cause total heat exchange in the course of passing through the passages.

In the meantime, since there is the air supply motor 42 in the air supply flow passage through which the outdoor air is drawn and supplied to the room, there is a problem of reduction of total heat exchange efficiency caused by rise of a temperature of the supply air coming from heat generated at the air supply motor 42.

In detail, the total heat exchange efficiency η is,

$$\eta = \frac{(\text{outdoor air temperature}) - (\text{supplying air temperture})}{(\text{outdoor air temperature}) - (\text{room temperture})} \times 100 (\%)$$

Therefore, if the temperature of the supply air rises due to heat from the air supply motor 42, the total heat exchange efficiency η is reduced.

Along with this, there has been a problem of difficulty of cutting off noise from the air supply motor 42 and the air discharge motor 52.

Accordingly, the present invention is directed to a ventilating system that substantially obviates one or more problems due to limitations and disadvantages of the

related art.

An object of the present invention is to provide a high efficiency total heat exchange ventilating system having high temperature efficiency and total heat exchange efficiency, by preventing a temperature of the supply air from rising by heat from the air supply motor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a ventilating system includes a case which is an exterior of the ventilating system, a total heat exchanger in the case for making heat exchange between air discharged to an outside of room and air supplied to the room, an air supply fan and an air discharge fan mounted in the same direction with reference to the total heat exchanger, and an air supply motor and an air discharge motor for supplying power to the air supply fan and the air discharge fan, respectively, wherein the air supply fan is mounted in an air flow line of the air being supplied, and the air supply motor is isolated from the air supply fan and exposed to an air flow line of the air being discharged.

The air discharge motor is also mounted in an air flow line of the air being discharged.

On one side, the case includes an outdoor air inlet in communication with an outside of room, and a room air inlet in communication with the room, and on the other side, a room air outlet in communication with the outside of the room for discharging the room air to an outside of the room and an outdoor air outlet for supplying the outdoor air to the room.

The case includes a passage connected between the outdoor air inlet and the outdoor air outlet through the total heat exchanger, and a passage connected between the room air inlet and the room air outlet through the total heat exchanger, wherein it is preferable that the outdoor air inlet and the outdoor air outlet, and the room air inlet and the room air outlet are arranged diagonally, respectively.

The ventilating system further includes a bypass flow line in the case so that the air flows without passing through the total heat exchanger. The bypass flow line includes a damper for opening/closing the bypass flow line.

The case includes spaces partitioned therein for housing the air supply fan and the air discharge fan respectively, and the air discharge motor and the air supply motor are housed in the air discharge fan housing having the air discharge fan housed therein, and the air supply motor and the air discharge motor are arranged in a line along a discharge air flow direction.

The air discharge fan housing further includes a motor housing for accommodating the air discharge motor and the air supply motor, and the motor housing includes an opening on a side of the air discharge fan for passing of the air being discharged.

In the meantime, the air supply fan and the air discharge fan may be centrifugal fans, and preferably sirocco fans.

Thus, the ventilation system of the present invention has the following advantages.

First, the exposure of the air discharge motor and the air supply motor not to an air supply flow line, but to an air discharge flow line permits to prevent reduction of total heat exchange efficiency caused by heat generated at the air supply motor.

Second, the air supply motor and the air discharge motor can be cooled down adequately by the air being discharged.

Third, the cutting off of noise from the air supply motor and the air discharge motor in one direction at the same time permits to enhance a noise cut-off effect.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a diagram showing a total heat exchange state of a related art ventilating system;

FIG. 2 illustrates a diagram showing a general ventilation state of the ventilating system in FIG. 1;

FIG. 3 illustrates a diagram of a ventilating system in accordance with a preferred embodiment of the present invention; and

FIG. 4 illustrates a diagram showing a general ventilation state of the ventilating system in FIG. 3.

Reference will now be made in detail to the preferred embodiments of the present invention, examples of which are illustrated in the accompanying drawings. Wherever possible, the same reference numbers will be used throughout the drawings to refer to the same or like parts.

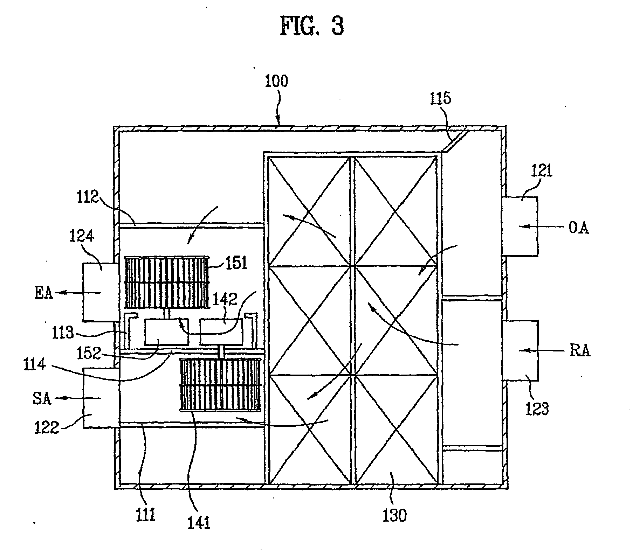

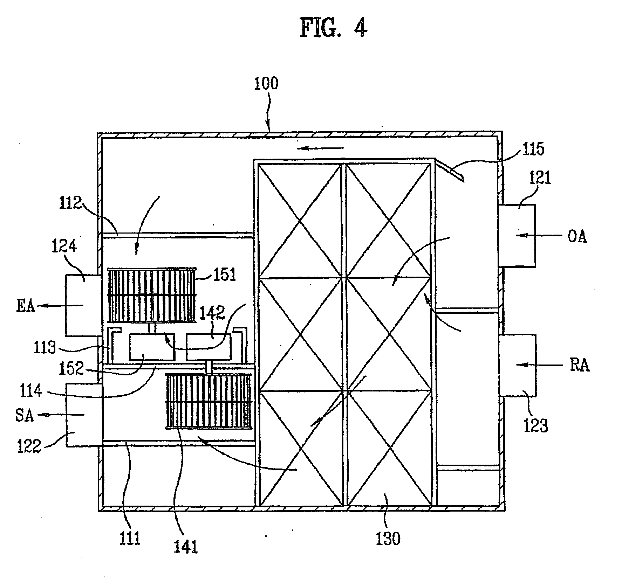

Referring to FIGS. 3 and 4, a ventilating system in accordance with a preferred embodiment of the present invention will be described.

The ventilating system is includes a case 100 which is an exterior thereof, a total heat exchanger 130 for making heat exchange between air being supplied/discharged, an air supply fan 141 and an air discharge fan 151 on one side of the total heat exchanger 130, and an air supply motor 142 and an air discharge motor 152 for supplying power to the air supply fan 141 and the air discharge fan 151, respectively.

In one side of the case 100, there is an outdoor air inlet 121 in communication with an outside of the room for drawing outdoor air (OA), and a room air inlet 123 in communication with the room for drawing room air (RA).

In the other side of the case 100, there is a room air outlet 124 in communication with an outside of the room for discharging exhaust air (EA) to the outside of room, and an outdoor air outlet 122 in communication with the room for supplying supply air (SA) to the room.

In the meantime, there are ducts (not shown) connected to the outdoor air inlet 121, the room air inlet 123, the outdoor air outlet 122, and the room air outlet 124, respectively.

In the case 100, there are a passage for guiding the outdoor air (OA) drawn through the outdoor air inlet 121 to the outdoor air outlet 122 through the total heat exchanger 130, and a passage for guiding the room air (RA) drawn through the room air inlet 123 to the room air outlet 124 through the total heat exchanger 30.

In the case 100, there is a damper 115 for opening/closing a bypass flow passage formed for air to flow without passing through the total heat exchanger 130.

In the case 100, there are an air supply fan housing 111 for housing the air supply fan 141 therein, and an air discharge fan housing 112 for housing the air discharge fan 151 therein.

The air supply fan housing 111 guides the outdoor air passed through the total heat exchanger 130 to the outdoor air outlet 122, and the air discharge fan housing 112 guides the room air passed through the total heat exchanger 130 to the room air outlet 124. The air supply fan housing 111 and the air discharge fan housing 112 also serve to isolate the room air from the outdoor air.

In this instance, for cross flow of the outdoor air and the room air to make smooth heat exchange, it is preferable that the outdoor air inlet 121 and the outdoor air outlet 122, and the room air inlet 123 and the room air outlet 124 are arranged at positions diagonal to each other.

With reference to an air flow, the air discharge fan 151 and the air discharge motor 152 are arranged in front of the room air outlet for forced discharge of the room air. On the other hand, with reference to an air flow, the air supply fan 141 and the air supply motor 142 are arranged in front of the outdoor air outlet 122 for forced supply of the outdoor air.

The air supply fan 141 and the air discharge fan 151 are arranged in parallel on one side of the total heat exchanger 130 such that the air supply motor 142 and the air discharge motor 152 are arranged on one line.

It is preferable that the air supply fan 141 and the air discharge fan 151 are radial flow fans each of which receives air in an axial direction and discharged in a radial direction, particularly, sirocco fans.

The air supply motor 142 and the air discharge motor 152 are arranged in the air discharge fan housing 112. In detail, the air supply fan 141 and the air supply motor 142 are positioned separated by the partition 114 which separates the air supply fan housing 111 and the air discharge fan housing 112, and the air supply motor 142 and the air discharge motor 152 are arranged in one line along a direction of discharge air flow.

Of course, positions of the air supply motor 142 and the air discharge motor 152 may be interchanged.

This is for preventing the supply air (SA) from being involved in reduction of temperature efficiency, humidity efficiency, and total heat exchange efficiency caused by the heat generated at the air supply motor 142 during the outdoor air passes through the air supply fan 141.

In detail, by isolating the air supply motor 142 from the air supply fan 141, an influence of heat generated at the air supply motor 142 to the supply air is cut off, and along with this, the air supply motor 142 is cooled by the exhaust air passing through the air discharge fan 151.

In this instance, since the total heat exchange efficiency $\eta$ is fixed by the outdoor air (OA), the room air (RA), and the supply air (SA), but not influenced from the exhaust air (EA), even if a temperature of the exhaust air (EA) rises by the heat generated at the air supply motor 142 and the air discharge motor 152, the total heat exchange efficiency is not influenced by the heat.

In the air discharge fan housing 112, there is a motor housing 113 for housing the air supply motor 142, and the air discharge motor 152.

It is preferable that, though the motor housing 113 surrounds the air supply motor 142 and the air discharge motor 152, the motor housing 113 has an opening on a side of the air discharge fan 151 for introduction of the exhaust air thereto to cool down the air supply motor 142 and the air discharge motor 152.

In addition to this, the surrounding of the air supply motor 142 and the air discharge motor 152 by the motor housing 113 cuts off noise from the air supply motor 142 and the air discharge motor 152.

The total heat exchange ventilation operation of the ventilation system of the present invention will be described.

As power is applied to the air discharge fan 151 at the time the room air is polluted, the room air (RA) is introduced to the case 100 through the room air inlet 123, and forcibly discharged to the outside of the room through the room air outlet 124 by the air discharge fan 151 via the total heat exchanger 130.

At the same time with this, as power is applied to the air supply fan 141, fresh outdoor air (OA) is introduced to the case 100 through the outdoor air inlet 121, and supplied to the room through the outdoor air outlet 122 via the total heat exchanger 130.

In this instance, the room air (RA) passing through the total heat exchanger 130 exchanges heat with the exhaust air (EA), to come to a state similar to a temperature and humidity with the room before being supplied to the room.

The exhaust air is introduced to the air discharge fan 151, and cools the air supply motor 142 and the air discharge motor 152 as the exhaust air passes through the motor housing 113.

In the meantime, referring to FIG. 4, in spring/autumn when there is no great temperature difference between indoor/outdoor, a general ventilation is performed in which no total heat exchange is made between the exhaust (EA) and the outdoor air(OA).

At first, the damper 115 in the case 100 is opened, to form a bypass flow line for the exhaust air (room air). Then, the room air (RA) drawn through the room air inlet 123 is discharged to an outside of the room directly through the air discharge fan 151 via the bypass flow line without passing through the total heat exchanger 130.

The fresh outdoor air (OA) being supplied to the room is introduced to the base 100 through the outdoor air inlet 121, passes through the total heat exchanger 130, and supplied to the room through the outdoor air outlet 122.

In this instance, the exhaust air cools down the air discharge motor 142 and the air supply motor 152 as the exhaust air passes through the motor housing 113. It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

**Claims**

1. A ventilating system comprising:

   a case which is an exterior of the ventilating system;
   a total heat exchanger in the case for making heat exchange between air discharged to an outside of room and air supplied to the room;
   an air supply fan and an air discharge fan mounted in the same direction with reference to the total heat exchanger; and
   an air supply motor and an air discharge motor for supplying power to the air supply fan and the air discharge fan, respectively, wherein the air supply fan is mounted in an air flow line of the air being supplied, and the air supply motor is isolated from the air supply fan and exposed to an air flow line of the air being discharged.

2. The ventilating system as claimed in claim 1, wherein the air discharge motor is mounted in an air flow line of the air being discharged.

3. The ventilating system as claimed in claim 1 or 2, wherein on one side, the case includes an outdoor air inlet in communication with an outside of room, and a room air inlet in communication with the room, and on the other side, a room air outlet in communication with the outside of the room for discharging the room air to an outside of the room and an outdoor air outlet for supplying the outdoor air to the room.

4. The ventilating system as claimed in claim 3, wherein the case includes;
   a passage connected between the outdoor air inlet and the outdoor air outlet through the total heat exchanger, and
   a passage connected between the room air inlet and the room air outlet through the total heat exchanger.

5. The ventilating system as claimed in claim 3 or 4, wherein the outdoor air inlet and the outdoor air outlet, and the room air inlet and the room air outlet are arranged diagonally, respectively.

6. The ventilating system as claimed in any of claims 1 to 5, further comprising a bypass flow line in the case so that the air flows without passing through the total heat exchanger.

7. The ventilating system as claimed in claim 6, further comprising a damper for opening/closing the bypass flow line.

8. The ventilating system as claimed in any of claims 1 to 7, wherein the air supply motor and the air discharge motor are arranged in a line along a discharge air flow direction.

9. The ventilating system as claimed in any of claims 1 to 8, wherein the case includes spaces partitioned therein for housing the air supply fan and the air discharge fan respectively, and the air discharge motor and the air supply motor are housed in an air discharge fan housing having the air discharge fan housed therein.

10. The ventilating system as claimed in claim 9, wherein the air discharge fan housing further includes a motor housing for accommodating the air discharge motor and the air supply motor.

11. The ventilating system as claimed in claim 10, wherein the motor housing includes an opening on a side of the air discharge fan for passing of the air being discharged.

12. The ventilating system as claimed in any of claims 1 to 11, wherein the air supply fan and the air discharge fan are centrifugal fans.

13. The ventilating system as claimed in any of claims 1 to 11, wherein the air supply fan and the air discharge fan are sirocco fans.

14. A method of operating a ventilating system according to any of claims 1 to 13.

FIG. 1
Related Art

FIG. 2
Related Art

## FIG. 3

FIG. 4

**European Patent Office**

**EUROPEAN SEARCH REPORT**

Application Number

EP 06 00 9785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/43992 A (SPOEHRLE, GEORGES) 2 September 1999 (1999-09-02) * page 7, line 7 - line 12; claims 1,2; figure 2 * | 1-14 | INV. F24F12/00 |
| A | US 5 119 987 A (KOBAYASHI ET AL) 9 June 1992 (1992-06-09) * column 4, line 32 - line 37; figures 2-4 * | 1 | |
| A | DE 199 03 280 A1 (BLUM, THEODOR) 10 August 2000 (2000-08-10) * abstract; figures * | 5 | |
| A | US 5 070 934 A (KUCHARCZYK ET AL) 10 December 1991 (1991-12-10) * column 11, line 12 - line 16; figure 5 * | 1 | |

TECHNICAL FIELDS SEARCHED (IPC)

F24F

The present search report has been drawn up for all claims

| Place of search | Date of completion of the search | Examiner |
|---|---|---|
| The Hague | 24 August 2006 | González-Granda, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 00 9785

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2006

| Patent document cited in search report | | Publication date | Patent family member(s) | | Publication date |
|---|---|---|---|---|---|
| WO 9943992 | A | 02-09-1999 | AU | 2437299 A | 15-09-1999 |
| US 5119987 | A | 09-06-1992 | GB | 2242515 A | 02-10-1991 |
| | | | JP | 2714220 B2 | 16-02-1998 |
| | | | JP | 3286942 A | 17-12-1991 |
| | | | KR | 9506160 B1 | 09-06-1995 |
| DE 19903280 | A1 | 10-08-2000 | NONE | | |
| US 5070934 | A | 10-12-1991 | CA | 1319292 C | 22-06-1993 |
| | | | DK | 260089 A | 01-12-1989 |
| | | | EP | 0344492 A2 | 06-12-1989 |
| | | | ES | 2042870 T3 | 16-12-1993 |
| | | | FI | 892526 A | 01-12-1989 |

EPO FORM P0459

For more details about this annex : see Official Journal of the European Patent Office, No. 12/82

## REFERENCES CITED IN THE DESCRIPTION

### Patent documents cited in the description

*   KR P20050039373